# EUROPEAN PATENT SPECIFICATION

(11) **EP 1 087 913 B1**
(45) Date of publication and mention of the grant of the patent: **06.03.2002**
(21) Application number: 99917292.7
(22) Date of filing: 10.05.1999
(51) Int. Cl.: C03B 37/05

(54) **DEVICE FOR PRODUCING ROCK WOOL WITH SHAPED-FRONT ROTATING CYLINDERS**
VORRICHTUNG ZUM HERSTELLEN VON STEINWOLLE MIT VORN GEFORMTEN DREHENDEN ZYLINDERN
DISPOSITIF DE PRODUCTION DE LAINE DE ROCHE EQUIPE DE CYLINDRES ROTATIFS AYANT UNE PARTIE AVANT FORMEE

(30) Priority: 20.05.1998 SI 9800142
(43) Date of publication of application: 04.04.2001
(73) Proprietor: Termo, D.D., Industrija Termicnih Izolacij, Skofja Loka, 4220 Skofja Loka (SI)
(72) Inventor: SIROK, Branko, 1360 Vrhnika (SI); MIHOVEC, Bojan;, 4220 Skofja Loka (SI); STREMFELJ, Branko;, 3270 Lasko (SI); KAVCIC, Marjan;, 4220 Skofja Loka (SI)
(74) Representative: Grünecker, Kinkeldey, Stockmair & Schwanhäusser Anwaltssozietät
(86) International application number: SI9900012
(87) International publication number: WO9959929

(56) References cited:
- WO-A-88/07980
- WO-A-96/16912
- US-A- 4 105 425
- US-A- 4 544 393

## Description

The invention relates to an axial centrifugal device for producing rock wool from fibers that are obtained from mineral melt by means of a centrifugal force, generated by one or more, usually four, cascading rotating cylinders that each generate a centrifugal force, blowing nozzles that generate an axial air flow along the outer surfaces of the rotating cylinders, and an accumulation grid.

Several devices for producing rock wool by means of a centrifugal force are known, in which the mineral melt is poured onto the mantle of the first rotating cylinder, where, due to the centrifugal force, part of the mineral melt is scattered into fibers, whereas the remaining part of the mineral melt is accelerated by the first rotating cylinder and flung onto the second rotating cylinder, where the process is repeated. This process is repeated until the last cylinder is reached (usually it is the fourth), where the last remaining portion of the mineral melt is scattered into fibers. The blowing nozzles along the edge of each rotating cylinder produce an axial air flow along the rotating cylinders, which air flow causes the fibers to be blown off, solidified in their definitive form, and wetted by the binder which is injected into the axial air flow from the openings on the edges of the rotating cylinders, and directs the fibers being formed and wetted by the binder toward the accumulation grid that is positioned perpendicularly or at a certain angle to the direction of the axial air flow. Out of solid state mineral fibers, wetted by the binder and deposited on the accumulation grid, a layer of rock wool is formed. The basic principle of producing rock wool by means of an axial centrifugal device is disclosed in patents WO-A1-93/13025, WO-A1-96/16912 and WO-A1-95/14135.

The difficulty with this method for producing rock wool is achieving a good and uniform intertwining of the mineral fibers, a good and uniform wetting of the mineral fibers by the binder, and preventing the layer of mineral fibers, once deposited on the accumulation grid, from tearing, which is provoked by extremes of the axial air flow velocity near the accumulation grid. The patent WO-A1-93/13025 does not solve the problem of the wetting of the mineral fibers by the binder, it only deals with the uniformity of the deposit of the mineral fibers on the accumulation grid and with the reduction of the distance between the rotating cylinders and the accumulation grid.

The patent WO-A1-95/14135 deals with the problem of the wetting of the mineral fibers by the binder; however, the process is complex and it is not related to the problem of the tearing of the layer of mineral fibers, deposited on the accumulation grid.

The patent WO-A1-96/16912 deals with the problem of the influence of the mineral melt viscosity on the rock wool quality, solving it in terms of geometrical disposition and rotational speed of the rotating cylinders. It does not tackle the problem of the wetting of the mineral fibers by the binder, nor the problem of the tearing of the layer of mineral fibers on the accumulation grid. It follows from the foregoing that particularly the problem of the intertwining of the mineral fibers and their wetting by the binder and the problem of further reducing tearing of the layer of mineral fibers, deposited on the accumulation grid, have not been satisfactorily solved as yet.

The present invention solves the technical problem of producing superior quality rock wool by the said process, it being recognized that the characteristics of the rock wool, produced by the said process, depend on the geometrical and mechanical characteristics of the mineral fibers, their mutual intertwining and their wetting by the binder. The quality of the rock wool, produced by the said process, proportionally depends on the homogeneity and on the isotropy of the said parameters. The more homogeneous and isotropic are the mutual intertwining of the mineral fibers and the distribution of the binder on the mineral fibers in the air flow before their deposition on the accumulation grid, the better is the quality of the rock wool, produced by the said process. Further, the quality of the rock wool, produced by the said process, depends on whether the already formed layer of mineral fibers, deposited on the accumulation grid, tears due to the extremes of the axial air flow velocity near the accumulation grid. The less the already formed layer of mineral fibers tears, the better is the quality of the rock wool, produced by the said process.

The object of the invention is to design an axial centrifugal device for producing rock wool that will provide a better and more uniform wetting of the mineral fibers by the binder, a better and more uniform mutual intertwining of the mineral fibers, and reduce tearing of the layer of mineral fibers already formed on the accumulation grid.

According to the invention this object is achieved by the axial centrifugal device according to claim 1.

According to the invention the problem described is solved by shaping the front of at least one of the rotating cylinders as a fan which generates a new radial air flow, directed outwards, and a new axial air counter-flow, directed backwards. Together, the axial air flow from the blowing nozzles situated along the edges of the rotating cylinders, and the radial air flow, generated by the fans, produce a swirling air flow with a high turbulent kinetic energy, thus determining a better dispersion of the binder, a better and more uniform mutual intertwining of the mineral fibers, and a better and more uniform wetting of the mineral fibers by the binder. The axial air counter-flow, generated by the fans, modifies the velocity profile of the air flow near the accumulation grid so that the extremes of the axial air flow velocity near the accumulation grid are diminished, thus reducing tearing of the layer of mineral fibers already formed on the accumulation grid, or eliminating it altogether.

The axial centrifugal device according to the invention, having rotating cylinders with fronts shaped so as to form a fan that produces an additional air flow, has the following advantages: a higher and more uniform wetting of the mineral fibers by the binder, a higher and more uniform mutual intertwining of the mineral fibers, and smaller extremes of the axial air flow velocity near the accumulation grid, on account of which the tearing of the layer of mineral fibers already formed on the accumulation grid is reduced, and consequently the quality of the rock wool, produced by the said process, is increased.

The invention will now be described with reference to a sample embodiment illustrated in the following figures, in which:

Figure 1 is a side view of an axial centrifugal device for producing rock wool with an accumulation grid and with air flows traced out.

Figure 2 is a front view of the rotating cylinders of the axial centrifugal device for producing rock wool with blowing nozzles for the axial air flow shown and with a schematic sketch of the course of the mineral melt.

Figure 3 is a section, taken along line A-A of Figure 2, of a rotating cylinder with its front shaped so as to form a fan, with air flows traced out.

Figure 4 shows a fan shaped as a ventilator rotor.

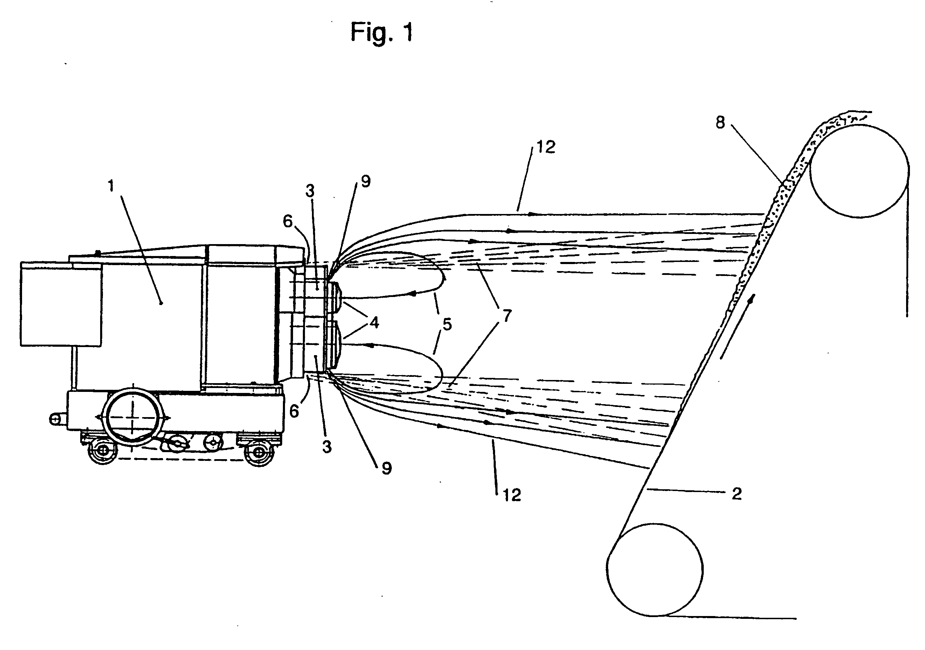

Figure 1 shows the axial centrifugal device 1 for producing rock wool 8 with a traveling accumulation grid 2. The rotating cylinders 3 generate a centrifugal force which causes the mineral melt 10 to scatter into fibers. The front of each cylinder 3 is shaped as a fan in the form of a ventilator rotor 4 that generates the additional radial air flow 13, directed outwards, and the axial air counter-flow 5, directed backwards. The blowing nozzles 6 along the edges of the rotating cylinders 3 produce an axial air flow 12, which conveys the mineral 1 fibers 7 to the accumulation grid 2. Out of the layer of mineral fibers, deposited on the accumulation grid 2, rock wool 8 is formed. Together, the axial air flow 12 from the blowing nozzles 6 and the radial air flow 13, generated by the ventilator rotor 4, produce a swirling air flow 9 with a high turbulent kinetic energy that determines a better dispersion of the binder and a better and more uniform wetting of the mineral fibers by the binder. The swirling air flow 9 also affects the definitive forming and solidification of the mineral fibers 7 from the mineral melt 10 and induces a better and more uniform mutual intertwining of the mineral fibers 7.

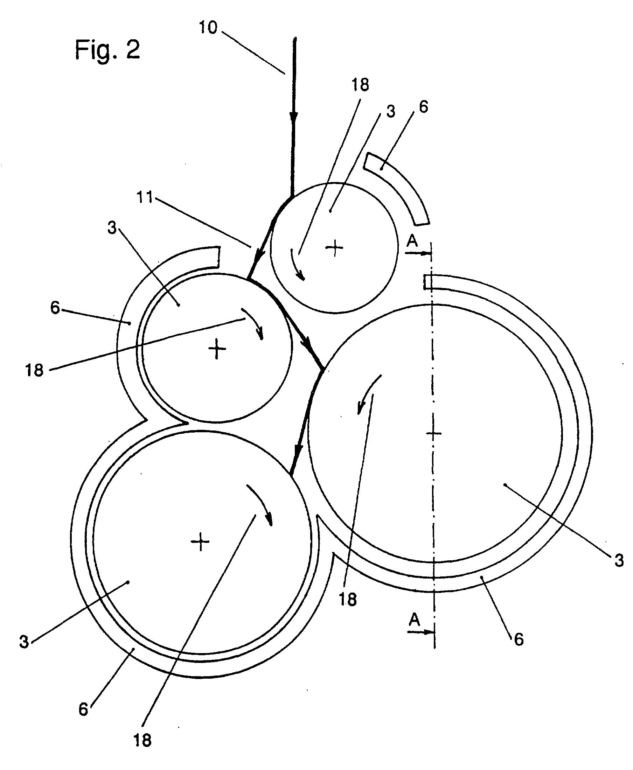

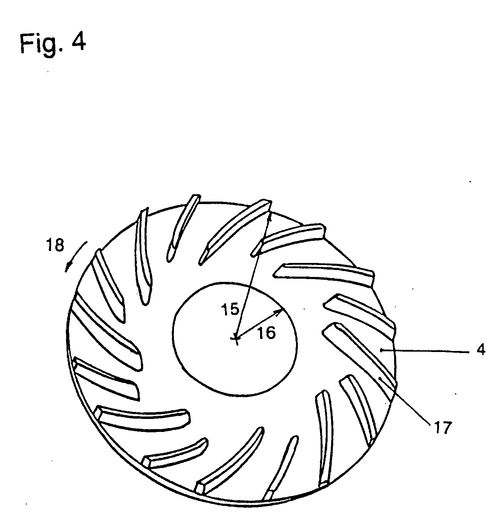

Figure 2 shows a front view of the four rotating cylinders 3, around which the blowing nozzles 6 are situated. The mineral melt 10 is directed onto the mantle of the topmost (namely, the first) rotating cylinder 3. On the mantle of the rotating cylinder 3 a thin film of mineral melt is formed, out of which fibers are generated by the centrifugal force. Thus, part of the mineral melt 10 is scattered into fibers and blown off by the axial air flow 12 from the blowing nozzles 6, whereas the remaining part of the mineral melt 11 is accelerated by the first rotating cylinder 3 and flung onto the next rotating cylinder 3, where the process is repeated. This process is then repeated until the last rotating cylinder 3 is reached, where the last remaining portion of the mineral melt 10 is scattered into fibers. The topmost rotating cylinder 3 rotates anti-clockwise, the next one rotates in the opposite direction, i e clockwise, and each of the following cylinders rotates in the opposite direction to its predecessor. In the Figures 2 and 4, the direction of rotation of the rotating cylinders is denoted by the reference number 18.

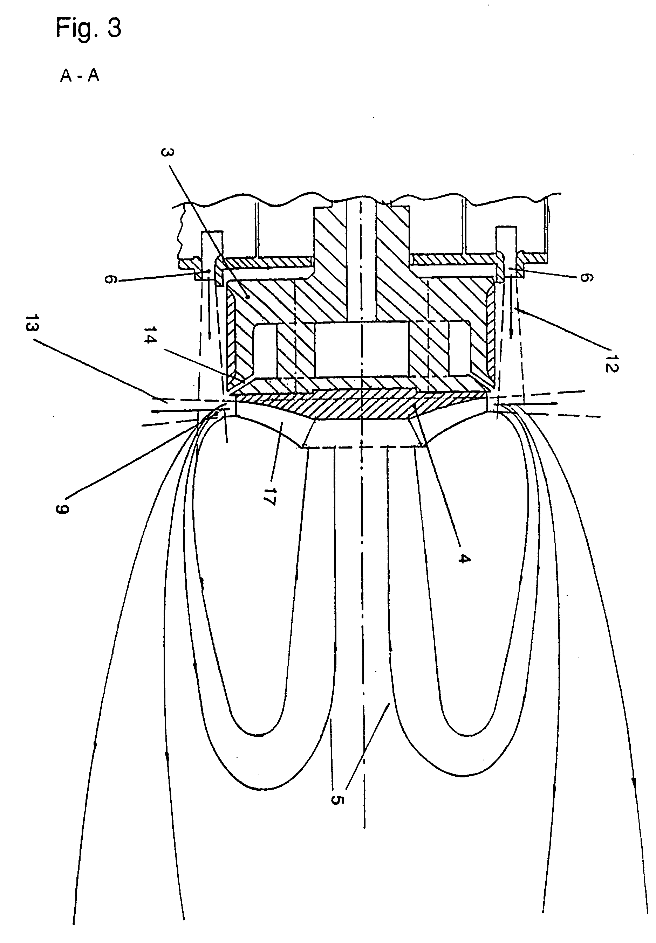

Figure 3 shows a section, taken along line A-A of Figure 2, of a rotating cylinder 3 with its front shaped as a fan in the form of a ventilator rotor 4. Along the edge of the rotating cylinder 3 there are blowing nozzles 6 that generate the axial air flow 12 which, together with the outwards radial air flow 13, produces a swirling air flow 9. The outwards radial air flow 13 is generated by the fan in the form of a ventilator rotor 4. On the edges of the rotating cylinders 3 there are openings 14 through which the binder is conveyed into the swirling air flow 9. The swirling air flow 9 possesses a high turbulent kinetic energy that affects the definitive forming and solidification of the mineral fibers 7, previously torn by the centrifugal force off the film of mineral melt, formed on the rotating cylinders 3. The axial air flow 12 conveys the mineral fibers 7 being formed into the swirling air flow 9. The swirling air flow 9 determines a better dispersion of the binder, a better and more uniform wetting of the mineral fibers 7 by the binder, it affects the definitive forming and solidification of the mineral fibers 7 out of the mineral melt 10, and induces a better and more uniform mutual intertwining of the mineral fibers 7.

Figure 4 shows an embodiment of the fan in the form of a ventilator rotor 4. The body of the ventilator rotor 4 is circular in form and thinner at the edge, that is at the outer radius 15, thickening inwards, that is toward the inner radius 16. Throughout the perimeter of the body of the ventilator rotor 4 there are blades 17, the working faces of which are parallel to the rotation axis of the rotating cylinders 3 and have a given inclination between 0° and 45° to the radial direction. Toward the outer radius 15, the blades 17 bend slightly in the direction opposite to the direction of rotation 18 of the rotating cylinder 3.

It will be appreciated by those skilled in the art that the fan that is the object of the present invention is not to be limited to the specific embodiment in the form of a ventilator rotor, described herein, since the object thereof may be embodied in many other ways covered by the appended patent claims.

## Claims

1. An axial centrifugal device (1) for producing rock wool (8), comprising one or more, usually four, cascading rotating cylinders (3) that each generate a centrifugal force, blowing nozzles (6) that generate an axial air flow (12) along the outer surfaces of the rotating cylinders, and an accumulation grid (2), **characterized in that** the front of at least one of the rotating cylinders (3) is shaped so as to form a fan that produces an additional radial air flow (13), and an axial air counter-flow (5), directed backwards.

2. An axial centrifugal device (1) as claimed in Claim 1, **characterized in that** the said fan is shaped as a ventilator rotor (4).

3. An axial centrifugal device (1) as claimed in Claim 2, **characterized in that** the body of the said ventilator rotor (4) is circular in form.

4. An axial centrifugal device (1) as claimed in Claim 2, **characterized in that** the body of the said ventilator rotor (4) is thinner at the edge, that is at the outer radius (15), thickening inwards, that is toward the inner radius (16).

5. An axial centrifugal device (1) as claimed in Claim 2, **characterized in that** throughout the perimeter of the said body of the ventilator rotor (4) there are blades (17), the working faces of which are parallel to the rotation axis of the rotating cylinders (3) and have a given inclination between 0° and 45° to the radial direction, and that toward the outer radius (15), the blades (17) bend slightly in the direction opposite to the direction of rotation (18) of the rotating cylinder (3).

## Patentansprüche

1. Axiale Schleudervorrichtung (1) zum Erzeugen von Steinwolle (8), die eine oder mehrere, gewöhnlich vier, als Kaskade angeordnete Drehzylinder (3), die jeweils eine Zentrifugalkraft erzeugen, Gebläsedüsen (6), die einen axialen Luftstrom (12) entlang der Außenoberflächen der Drehzylinder erzeugen, sowie ein Sammelgitter (2) umfasst, **dadurch gekennzeichnet, dass** die Vorderseite von wenigstens einem Drehzylinder (3) in der Form eines Ventilators ausgebildet ist, der einen zusätzlichen radialen Luftstrom (13) sowie einen axialen und nach hinten gerichteten Gegenluftstrom (5) erzeugt.

2. Axiale Schleudervorrichtung (1) nach Anspruch 1, **dadurch gekennzeichnet, dass** der Ventilator in der Form eines Ventilatorrotors (4) ausgebildet ist.

3. Axiale Schleudervorrichtung (1) nach Anspruch 2, **dadurch gekennzeichnet, dass** der Körper des Ventilatorrotors (4) kreisförmig ausgebildet ist.

4. Axiale Schleudervorrichtung (1) nach Anspruch 2, **dadurch gekennzeichnet, dass** der Körper des Ventilatorrotors (4) am Rand, d.h. am Außenradius (15) dünner ausgebildet ist und nach innen zum Innenradius (16) hin dicker wird.

5. Axiale Schleudervorrichtung (1) nach Anspruch 2, **dadurch gekennzeichnet, dass** entlang des gesamten Umfangs des Körpers des Ventilatorrotors (4) Blätter (17) vorgesehen sind, deren Funktionsflächen parallel zu der Drehachse der Drehzylinder (3) ausgerichtet sind und eine vorbestimmte Neigung zwischen 0° und 45° zu der Radialrichtung aufweisen, wobei sich die Blätter (17) zum Außenradius (15) hin leicht in der zu der Drehrichtung (18) der Drehzylinder (3) entgegengesetzten Richtung neigen.

## Revendications

1. Dispositif centrifuge axial (1) destiné à la production de laine de roche (8), comprenant au moins un cylindre rotatif (3) ou plusieurs cylindres, habituellement quatre, montés en cascade, chacun créant une force centrifuge, des buses de soufflage (6) qui créent un courant d'air axial (12) le long des surfaces externes des cylindres rotatifs, et une grille d'accumulation (2), **caractérisé en ce que** l'avant de l'un au moins des cylindres rotatifs (3) a une configuration formant un ventilateur qui produit un courant d'air radial supplémentaire (13) et un contre-courant d'air axial (5) dirigé vers l'arrière.

2. Dispositif centrifuge axial (1) selon la revendication 1, **caractérisé en ce que** le ventilateur a la forme d'un rotor de ventilation (4).

3. Dispositif centrifuge axial (1) selon la revendication 2, **caractérisé en ce que** le corps du rotor (4) de ventilation a une forme circulaire.

4. Dispositif centrifuge axial (1) selon la revendication 2, **caractérisé en ce que** le corps du rotor de ventilateur (4) est plus mince au bord, c'est-à-dire à la périphérie externe (15), et s'épaissit vers l'intérieur, c'est-à-dire vers la périphérie interne (16).

5. Dispositif centrifuge axial (1) selon la revendication 2, **caractérisé en ce que**, à toute la périphérie du corps du rotor de ventilation (4) sont placées des ailettes (17) dont les faces de travail sont parallèles à l'axe de rotation des cylindres rotatifs (3) et ont une inclinaison déterminée comprise entre 0 et 45° par rapport à la direction radiale, et **en ce que**, vers la périphérie externe (15), les ailettes (17) sont légèrement courbées en sens opposé au sens de rotation (18) du cylindre rotatif (3).
